# EUROPEAN PATENT SPECIFICATION

(11) **EP 4 345 999 B1**
(45) Date of publication and mention of the grant of the patent: **11.02.2026**
(21) Application number: 22912002.7
(22) Date of filing: 22.12.2022
(51) Int. Cl.: H01M 50/35, H01M 50/20, H01M 50/249

(54) **BATTERY MODULE HAVING IMPROVED SAFETY AND ASSEMBLABILITY**
BATTERIEMODUL MIT VERBESSERTER SICHERHEIT UND MONTAGE
MODULE DE BATTERIE À SÉCURITÉ ET ASSEMBLAGE AMÉLIORÉS

(30) Priority: 24.12.2021 KR 20210187503
(43) Date of publication of application: 03.04.2024
(73) Proprietor: LG Energy Solution, Ltd., Seoul 07335 (KR)
(72) Inventor: PARK, Ju-Hun, Daejeon 34122 (KR); SEONG, Jun-Yeob, Daejeon 34122 (KR); JUNG, Hye-Mi, Daejeon 34122 (KR)
(74) Representative: Plasseraud IP
(86) International application number: PCT/KR2022/021124
(87) International publication number: WO 2023/121369

(56) References cited:
- JP-A- 2014 160 571
- JP-A- 2014 160 571
- JP-A- 2018 166 052
- KR-A- 20130 135 430
- KR-A- 20210 037 453
- KR-B1- 102 119 183
- US-A1- 2016 248 058
- US-A1- 2018 241 017
- US-B2- 10 446 813

## Description

### TECHNICAL FIELD

The present application claims priority to Korean Patent Application No. 10-2021-0187503, filed on December 24, 2021 in the Republic of Korea.

The present disclosure relates to a battery, and more particularly, to a battery module having improved safety and assemblability, and a battery pack and a vehicle including the battery module.

### BACKGROUND ART

As the demand for portable electronic products such as smartphones, laptops, and wearable devices has rapidly increased and the commercialization of robots, electric vehicles, etc. has begun in earnest, research on high-performance secondary batteries capable of repeated charging/discharging has been actively conducted.

Currently commercialized secondary batteries include nickel cadmium batteries, nickel hydride batteries, nickel zinc batteries, and lithium secondary batteries. Among them, lithium secondary batteries are in the spotlight because they have almost no memory effect compared to nickel-based secondary batteries, and thus, have advantages of free charge/discharge, very low self-discharge rate, and high energy density.

A lithium secondary battery mainly uses a lithium-based oxide and a carbon material as a positive electrode active material and a negative electrode active material, respectively. A lithium secondary battery includes an electrode assembly in which a positive electrode plate and a negative electrode plate coated with a positive electrode active material and a negative electrode active material are located with a separator therebetween, and a casing in which the electrode assembly is air-tightly accommodated together with an electrolyte, that is, a battery case. Recently, development a solid-state battery that does not use a liquid electrolyte has been actively conducted.

In general, according to a shape of a casing, lithium secondary batteries may be classified into can-type secondary batteries in which an electrode assembly is received in a metal can, and pouch-type secondary batteries in which an electrode assembly is received in a pouch of an aluminum laminate sheet.

Recently, secondary batteries have been widely used for driving or energy storage not only in small devices such as portable electronic devices but also in medium and large-sized devices such as electric vehicles and energy storage systems (ESSs). A plurality of secondary batteries may be electrically connected to each other and accommodated together in a module case to constitute one battery module. A plurality of battery modules may be connected to each other to constitute one battery pack.

However, when a plurality of battery modules are included in a battery pack, the battery pack may be vulnerable to a thermal chain reaction between the battery modules. For example, when an event such as thermal runaway occurs in one battery module, it is necessary to suppress propagation of the thermal runaway to other battery modules. When propagation of thermal runaway between battery modules is not suppressed, an event occurring in a specific module may cause a chain reaction in several battery modules, thereby causing an explosion or fire or increasing the size thereof.

In particular, when an event such as thermal runaway occurs in any one battery module, gas, flame, or spark may be discharged to the outside. When discharge of such gas, flame, or spark is not appropriately controlled, the battery module may explode, and the gas or flame may be discharged to other battery modules. This may cause a thermal chain reaction of other battery modules.

For a battery module, it is necessary to improve assemblability as well as to ensure such safety. In particular, battery modules may be manufactured by assembling a plurality of elements. In this case, when assemblability is poor, product cost and production time of the battery modules may increase, thereby deteriorating productivity. Furthermore, it is undesirable that assemblability or productivity decrease in order to improve safety of battery modules. Typically, in a process of providing a configuration for discharging gas or flame to improve safety of a battery module, when an assembly or manufacturing process is complicated, productivity of the battery module decreases, and thus, the safety configuration may be difficult to be practically applied in the battery industry. US 2016/248058 A1 discloses a known battery module.

### DISCLOSURE

### Technical Problem

The present disclosure is designed to solve the problems of the related art, and therefore the present disclosure is directed to providing a battery module having improved assemblability and safety, and a battery pack and a vehicle including the battery module.

However, technical objectives to be achieved by the present disclosure are not limited thereto, and other unmentioned technical objectives will be apparent to one of ordinary skill in the art from the description of the present disclosure.

### Technical Solution

**In** one aspect of the present disclosure, there is provided a battery module including a cell assembly including at least one battery cell, and a module frame including a plurality of unit frames that are inserted and coupled to each other, an inner space in which the cell assembly is accommodated, and a venting channel provided in an overlapping portion formed through the insertion.

Here, each of the plurality of unit frames includes a center plate, and two end plates integrally formed with the center plate and bent at both ends of the center plate. The unit frames (U) are formed by bending both ends of a plate, which lies down in the horizontal direction, upward at about 90°.

At least one of the plurality of unit frames includes an opening formed in the end plates.

The unit frame includes an uneven structure formed at an end of the end plates to form the opening.

Also, the plurality of unit frames includes a first frame, and a second frame including the center plate having a width greater than a width of the center plate of the first frame.

Also, at least a part of the end plates provided in the first frame may contact the center plate of the second frame.

Also, an end of the end plates of the second frame may extend to the center plate of the first frame.

Also, the end plates of the second frame may surround at least a part of the center plate of the first frame.

Also, the plurality of unit frames may further include a third frame including the center plate having a width greater than a width of the center plate of the second frame.

Also, the first frame may include a mounting groove formed in an inner surface so that an end of the at least one battery cell is seated in the mounting groove, wherein the mounting groove protrudes toward the venting channel.

Also, two end plates located at the overlapping portion may include an inlet and an outlet of the venting channel at opposite ends.

Also, the venting channel may be configured so that a flow direction of a fluid is perpendicular to a direction in which the plurality of unit frames are coupled to each other.

Also, the battery module according to the present disclosure may further include an end frame configured to close an open end, in a state where the plurality of unit frames are inserted and coupled to each other, wherein the end frame includes an end guide portion configured to guide insertion positions of the plurality of unit frames.

In another aspect of the present disclosure, there is also provided a battery pack including the battery module according to the present disclosure.

According to another aspect of the present disclosure, there is provided a vehicle including the battery module according to the present disclosure.

### Advantageous Effects

According to an aspect of the present disclosure, safety of a battery module may be improved.

In particular, according to an embodiment of the present disclosure, discharge of gas or flame generated in a battery module may be appropriately controlled, through a venting channel.

Accordingly, propagation of a thermal event to other adjacent battery modules due to a flame or gas discharged from a specific battery module in which the event occurs may be prevented.

Furthermore, according to an embodiment of the present disclosure, because a sufficient venting channel is configured through a multi-U-frame structure, gas generated in a battery module may be smoothly discharged.

Accordingly, explosion of a battery module due to increased internal pressure may be prevented.

Also, according to an aspect of the present disclosure, assemblability or productivity of a battery module may be improved.

In particular, according to an embodiment of the present disclosure, a process of assembling a module frame including a venting channel may be simplified. Furthermore, according to an embodiment of the present disclosure, a venting channel may be easily formed by using a gap formed when two or more U-frames are engaged with each other.

Also, according to an embodiment of the present disclosure, an obstruction for blocking external exposure of a spark or flow resistance may be provided on a module frame. Accordingly, another fire or explosion may be more effectively prevented from occurring outside a battery module.

Also, according to an aspect of the present disclosure, a configuration for applying venting channels having various structures may be easily implemented.

The present disclosure may have various other effects, which will be described in each embodiment, or descriptions of effects that may be easily inferred by one of ordinary skill in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view illustrating a battery module, according to an embodiment of the present disclosure.
FIG. 2 is an exploded perspective view illustrating a configuration of FIG. 1.
FIG. 3 is an exploded perspective view schematically illustrating a configuration of coupling a module frame included in a battery module, according to an embodiment of the present disclosure.
FIG. 4 is a combined perspective view illustrating the configuration of FIG. 3.
FIG. 5 is a cross-sectional view taken along line A1-A1' of FIG. 4.
FIGS. 6 and 7 are perspective views illustrating different unit frames provided in a module frame, in a battery module, according to an embodiment of the present disclosure.
FIG. 8 is a cross-sectional view illustrating a configuration of a module frame provided in a battery module, according to an embodiment of the present disclosure.
FIG. 9 is a perspective view schematically illustrating a configuration of a unit frame, according to another embodiment of the present disclosure.
FIG. 10 is a cross-sectional view schematically illustrating a configuration of a module frame including the unit frame of FIG. 9.
FIG. 11 is a perspective view schematically illustrating a configuration of a unit frame, according to still another embodiment of the present disclosure.
FIG. 12 is a cross-sectional view schematically illustrating a configuration of a module frame including the unit frame of FIG. 11.
FIG. 13 is a perspective view schematically illustrating a configuration of a unit frame, according to still another embodiment of the present disclosure.
FIG. 14 is a cross-sectional view schematically illustrating a configuration of a module frame including the unit frame of FIG. 13.
FIG. 15 is an exploded perspective view schematically illustrating some elements of a battery module, according to still another embodiment of the present disclosure.
FIG. 16 is an exploded perspective view schematically illustrating some elements of a battery module, according to still another embodiment of the present disclosure.
FIG. 17 is a cross-sectional view schematically illustrating a configuration of a module frame including the unit frame of FIG. 16.
FIG. 18 is a perspective view schematically illustrating a configuration of a module frame, according to still another embodiment of the present disclosure.
FIG. 19 is an exploded perspective view illustrating the configuration of FIG. 18.
FIG. 20 is a cross-sectional view taken along line A5-A5' of FIG. 18.
FIG. 21 is an enlarged view illustrating a portion A6 of FIG. 18.
FIG. 22 is an exploded perspective view schematically illustrating some elements of a battery module, according to still another embodiment of the present disclosure.
FIG. 23 is a cross-sectional view illustrating a state where the elements of FIG. 22 are coupled to each other.
FIG. 24 is a view illustrating a first frame, in the battery module of FIG. 22, viewed from the top.
FIG. 25 is a top cross-sectional view schematically illustrating some elements of a battery module, according to still another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

It will be understood by one of ordinary skill in the art that when terms indicating directions such as upper, lower, left, right, front, and rear are used, these terms are only for convenience of explanation and may vary according to a position of a target object, a position of an observer, etc. In the specification, unless otherwise described, a Y axis direction may represent a left-right direction, an X axis direction may represent a front-back direction, and a Z axis direction may represent an up-down direction.

In addition, in the specification, various embodiments are included. When the same or similar description as in other embodiments may be applied, a detailed description will be omitted or briefly provided, and a difference from other embodiments will be mainly described.

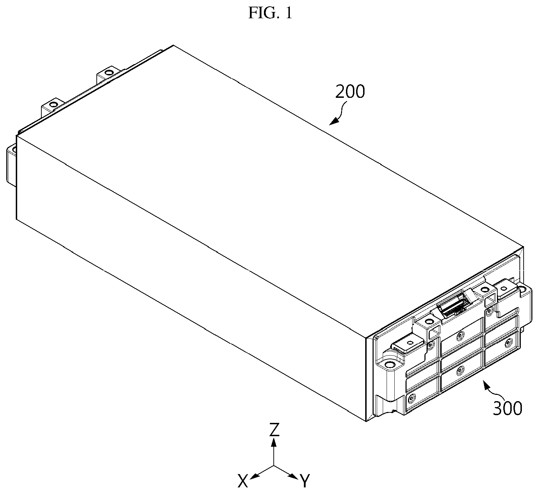

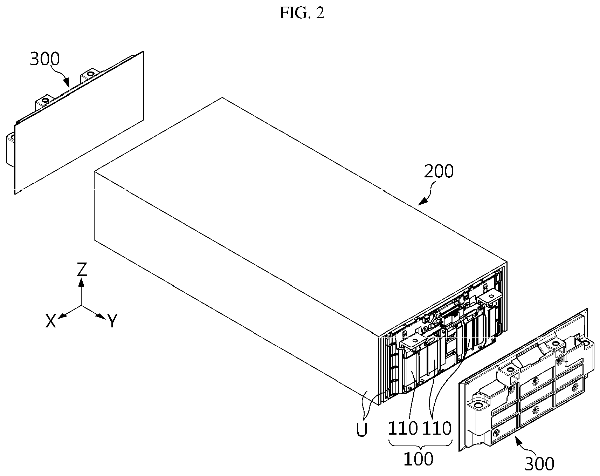

FIG. 1 is a perspective view illustrating a battery module, according to an embodiment of the present disclosure. FIG. 2 is an exploded perspective view illustrating a configuration of FIG. 1.

Referring to FIGS. 1 and 2, a battery module according to the present disclosure includes a cell assembly 100 and a module frame 200.

The cell assembly 100 may include one or more battery cells 110. Each battery cell 110 may refer to a secondary battery. The secondary battery may be configured to be repeatedly charged and discharged. In particular, the secondary battery, that is, the battery cell 110 may include an electrode assembly, an electrolyte, and a battery case. Although the battery cell 110 may be a lithium battery, the present disclosure is not necessarily limited to a specific type of the battery.

The battery cell 110 provided in the cell assembly 100 may be a pouch-type secondary battery. In this case, a casing of the battery cell 110 may be a pouch casing in which an aluminum layer is surrounded by a polymer layer. Furthermore, the battery cell 110, that is, the pouch-type battery cell 110, may include a receiving portion and a sealing portion in a structural aspect. The receiving portion may refer to a portion in which an electrode assembly (a positive electrode plate, a negative electrode plate, and a separator) and an electrolyte are accommodated, and the sealing portion may refer to a portion in which a pouch casing is fused to surround the receiving portion.

In particular, a pouch-type cell may include four side surfaces (edges) around a receiving portion. In this case, all four side surfaces may be sealed, or only three side surfaces may be sealed. In this case, when a cell in which four side surfaces are sealed may be referred to as a four-side sealing cell, and a cell in which three side surfaces are sealed may be referred to as a three-side sealing cell.

A plurality of battery cells 110 may be included in the battery module. Each battery cell 110 may include an electrode lead. The electrode lead may include a positive electrode lead and a negative electrode lead, and the positive electrode lead and the negative electrode lead may protrude from the same side surface (edge) or different side surfaces of the battery cell 110. In this case, a cell in which a positive electrode lead and a negative electrode lead are located on the same side surface may be referred to as a unidirectional cell, and a cell in which a positive electrode lead and a negative electrode lead are located on different side surfaces, in particular, opposite side surfaces may be referred to as a bidirectional cell.

Another type of secondary battery, for example, a cylindrical battery or a prismatic battery, may also be employed as the battery cell 110 in the cell assembly 100.

The plurality of battery cells 110 may be stacked to constitute the cell assembly 100. That is, the cell assembly 100 according to the present disclosure may be formed by stacking the plurality of battery cells 110 in at least one direction. For example, as shown in FIG. 2, a plurality of pouch-type battery cells 110 may be located parallel to each other in a horizontal direction, for example, the left-right direction (X axis direction), while being erected in the up-down direction (vertical direction, Z axis direction). In this case, electrode leads of each battery cell 110 may be located at both ends in the front-back direction (Y axis direction).

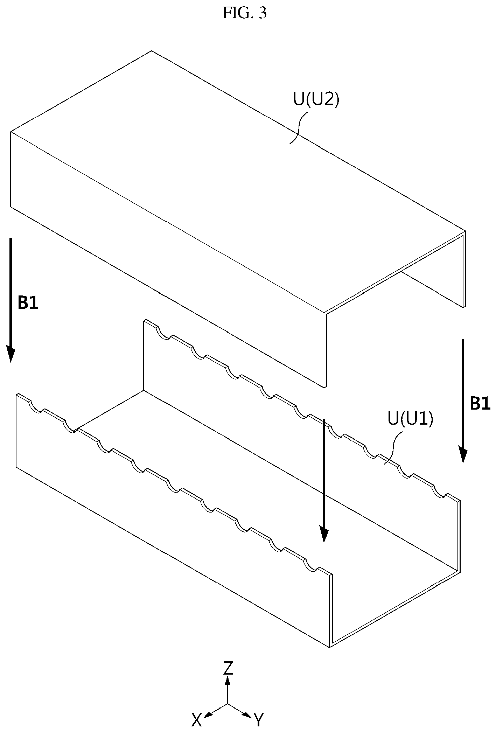

The module frame 200 may have an empty inner space in which the cell assembly 100 may be accommodated. In particular, the module frame 200 may include a plurality of unit frames U. In this case, the plurality of unit frames U may be inserted and coupled to each other. The module frame 200 may include a venting channel in a space formed when the plurality of unit frames U are inserted and coupled to each other, which will be described in more detail with further reference to FIGS. 3 to 5.

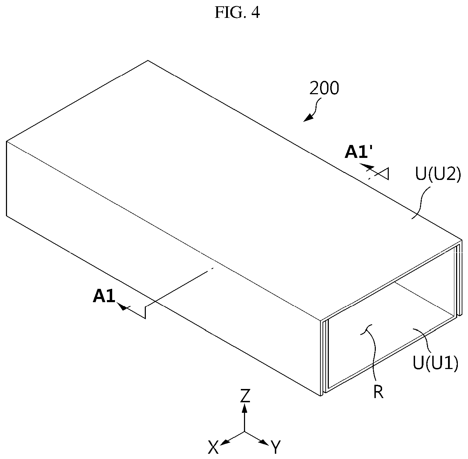

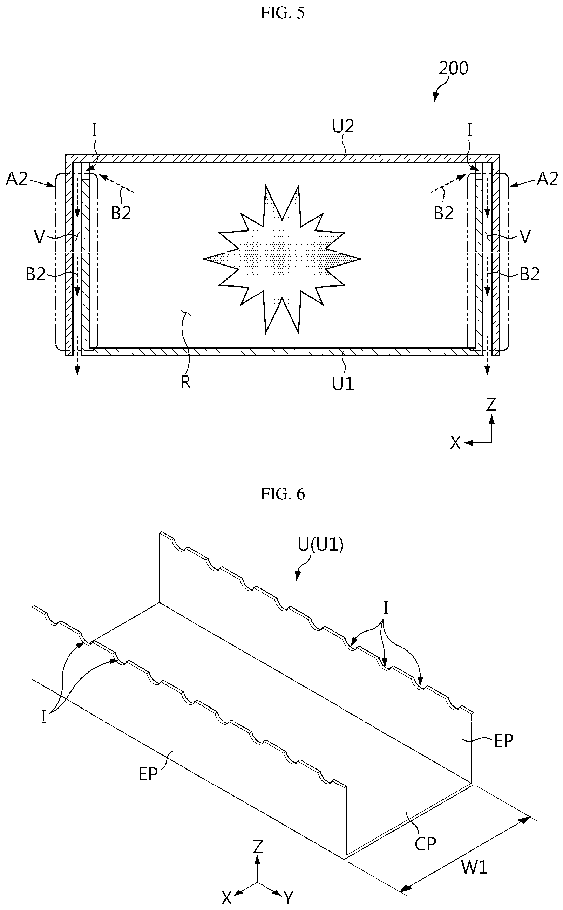

FIG. 3 is an exploded perspective view schematically illustrating a configuration of coupling the module frame 200 included in a battery module, according to an embodiment of the present disclosure. FIG. 4 is a combined perspective view illustrating the configuration of FIG. 3. Also, FIG. 5 is a cross-sectional view taken along line A1-A1' of FIG. 4.

First, referring to FIG. 3, two different unit frames U may be coupled to each other as marked by an arrow B1. In this case, the two unit frames U may be assembled by being engaged with each other through insertion, as shown in FIG. 4. After a plurality of unit frames U are assembled in this way, an empty inner space R may be formed as shown in FIG. 4 so that the cell assembly 100 is assembled in the inner space.

Also, the module frame 200 may include an overlapping portion formed through insertion. The overlapping portion A2 may be a stacked structure provided in a process of forming an insertion structure when different unit frames U are inserted into each other, as shown in FIG. 5. Furthermore, the overlapping portion may be located on the same side surface of the receiving space R of the cell assembly 100, in a state where the different unit frames U are inserted and coupled to each other. The overlapping portion may be formed so that two plate structures face each other. For example, in an embodiment of FIG. 5, the overlapping portion may be formed on each of a left plate and a right plate between the two unit frames U combined in the up-down direction.

A venting channel V may be provided in the overlapping portion formed in this way. That is, the overlapping portion may be formed by coupling the plurality of unit frames U so as to be partially stacked, and stacked portions may not be completely in close contact but may be at least partially spaced apart from each other to form an empty space that is the venting channel V. The venting channel V may function as a path through which, when venting gas or the like is ejected from the cell assembly 100 accommodated in the inner space R of the module frame 200, the venting gas or the like is discharged to the outside of the module frame 200, as marked by an arrow B2. Furthermore, the venting channel V may be formed in a separation space between the unit frames U, in the insertion structure, in particular, in the overlapping portion between the plurality of unit frames U.

According to the embodiment of the present disclosure, the module frame 200 including the venting channel V may be manufactured through a simple process. Accordingly, when venting gas or the like is ejected from a specific battery cell 110 in an abnormal situation such as thermal runaway, the venting gas or the like may be discharged to the outside, thereby preventing explosion due to increased internal pressure of the battery module. Also, in this case, because venting gas is discharged only through a designated path, thermal runaway propagation between modules may be prevented through directional venting.

Also, according to the embodiment, assemblability or productivity of the battery module may be improved. In particular, according to the embodiment, because the module frame 200 is simply assembled through insertion between the unit frames U, and the venting channel V is formed in the module frame 200, safety may be ensured.

The plurality of unit frames U provided in the module frame 200 may be formed in a plate shape. In this case, the unit frames U may be easily manufactured, and the insertion structure may be easily implemented. Also, in this case, a volume or a weight of the unit frames U may be easily reduced.

In the module frame 200, in order to maintain an inserted state between the plurality of unit frames U, various fastening methods may be used. For example, the plurality of unit frames U may be coupled or fixed to each other by using any of various fastening methods such as welding, sliding guide, fitting, bolting, or adhesion.

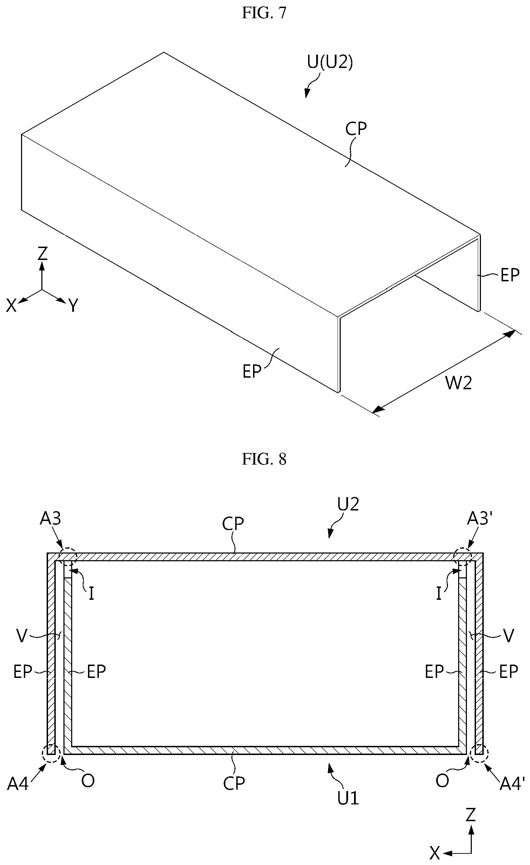

The unit frame U may include a center plate CP and an end plate EP, which will be described in more detail with reference to FIGS. 6 and 7.

FIGS. 6 and 7 are perspective views illustrating different unit frames U provided in the module frame 200, in a battery module, according to an embodiment of the present disclosure.

Referring to FIGS. 6 and 7, the unit frame U may include the center plate CP, and two end plates EP located at both ends of the center plate CP. In particular, the two end plates EP may be bent at ends of the center plate CP. In more detail, the center plate CP may be formed in a plate shape that lies down in the horizontal direction parallel to a horizontal plane, for example, an X-Y plane. The two end plates EP may be coupled by being inclined at a certain angle from the center plate CP, at a left end and a right end of the center plate CP.

In particular, the end plates EP and the center plate CP are integrally formed with each other. Furthermore, the end plates EP and the center plate CP are formed by bending one plate. That is, the unit frame U is formed in a bent plate shape. For example, the unit frame U is formed by bending both ends of a plate, which lies down in the horizontal direction, upward at about 90°. In this case, the unit frame U may be referred to as a U-frame, due to its shape.

Also, the plurality of unit frames U provided in the module frame 200 may have different shapes. In particular, the plurality of unit frames U may have different sizes or shapes so as to be inserted and coupled to each other. For example, one unit frame U provided in the module frame 200 may be formed in a U-frame shape with both ends bent upward, as shown in FIG. 6. In this case, an inner space of the unit frame U may be open upward. Another unit frame U provided in the module frame 200 may be formed in a U-frame shape with both ends bent downward, as shown in FIG. 7. In this case, an inner space of the unit frame U may be open downward, opposite to an open direction of the unit frame U of FIG. 6.

In this embodiment, two unit frames U1, U2 may be inserted and coupled to each other, in a state where open portions face each other. That is, two U-frames may be engaged with each other. For example, considering together with a configuration of FIGS. 3 and 4, the U-frame of FIG. 6 may be located at a lower position and the U-frame of FIG. 7 may be located at an upper position, so that open ends face each other. The two U-frames may be inserted and coupled to each other to form the receiving space R of the cell assembly 100 and the venting channel V on a side of the receiving space R. In particular, a left side, a right side, and a lower side of the receiving space R of the cell assembly 100 may be defined by the first frame U1, and the left side, the right side, and an upper side of the receiving space R of the cell assembly 100 may be defined by the second frame U2.

According to this embodiment of the present disclosure, the unit frame U may be simply manufactured, and a volume or a weight of the unit frame U may be easily reduced. Also, in this case, an assembly process through overlapping between the unit frames U may be easily performed, and the venting channel V may be easily formed through the assembly process.

Because the module frame 200 may form the exterior of the battery module, the module frame 200 may be formed of any of various materials for maintaining mechanical and structural strength above a certain level. For example, each unit frame U may be formed of a metal material or a plastic material. Furthermore, the unit frame U may include a heat-resistant material that may withstand heat above a certain level. In more detail, the unit frame U may include a material such as steel, in particular, SUS. Also, the unit frame U may include an electrically insulating material to ensure electrical insulation with the battery cell 110. For example, the unit frame U may be formed by coating an insulating material on an outer surface of a metal material. In addition, any of various materials well known at the time of filing the present application may be used as a material of the module frame 200. A representative configuration of the present disclosure is not limited to a specific material of the module frame 200. Also, the plurality of unit frames U that are inserted and coupled to each other may be formed of different materials.

The plurality of unit frames U may include a first frame U1 and a second frame U2, as shown in FIGS. 3 to 7. The second frame U2 may be larger than the first frame U1. In particular, the second frame U2 may be configured so that the first frame U1 is inserted into an inner space. Accordingly, the first frame U1 may be referred to as an inner frame, and the second frame U2 may be referred to as an outer frame.

For example, as shown in FIGS. 6 and 7, when each of the first frame U1 and the second frame U2 includes the center plate CP and two end plates EP, sizes of the center plates CP of the two unit frames U may be different from each other. That is, when a width of the center plate CP of the first frame U1 in the left-right direction is W1 and a width of the center plate CP of the second frame U2 in the left-right direction is W2, a relationship of W1 < W2 is obtained.

Because the two end plates EP are provided at both ends of the center plate CP, a width difference of the center plates CP may be replaced by a separation distance difference of the two end plates EP. Accordingly, in an embodiment of FIGS. 6 and 7, a separation distance between the two end plates EP of the first frame U1 in the left-right direction may be less than a separation distance between the two end plates EP of the second frame U2 in the left-right direction. Accordingly, the two end plates EP of the first frame U1 may be inserted into a space between the two end plates EP of the second frame U2.

According to this embodiment of the present disclosure, even with a simple assembly process between the plurality of unit frames U, the venting channel V may be more easily formed. Accordingly, assimilability, or productivity may be further improved along with safety of the battery module.

In particular, as shown in FIG. 5, the second frame U2 that is an upper frame may have a width greater than a width of the first frame U1 that is a lower frame. That is, the unit frame U that is coupled from an upper side may have a width greater than a width of the unit frame U that is coupled from a lower side.

In this case, venting gas discharged from the cell assembly 100 may move upward as marked by an arrow B2 in FIG. 5, may move above an upper end of the second frame U2, and may be introduced into the venting channel V. In this case, because venting gas is typically in a high-temperature state, the venting gas may tend to move upward in an inner space of the module frame 200. Accordingly, according to the embodiment, high-temperature venting gas or the like may be smoothly and rapidly introduced into the venting channel V.

In the embodiment of FIG. 5, the venting channel V may be formed so that venting gas flows downward and then is discharged to the outside. In this case, because a flame or the like has a strong tendency to move only upward, the flame or the like may be suppressed as much as possible from being discharged downward to the outside of the venting channel V.

FIG. 8 is a cross-sectional view illustrating a configuration of the module frame 200 provided in a battery module, according to an embodiment of the present disclosure. For example, FIG. 8 may be a cross-sectional view taken along line A1-A1' of FIG. 4, like in FIG. 5.

Referring to FIG. 8, at least a part of the end plate EP of a unit frame U may contact the center plate CP of another unit frame U. In particular, from among two unit frames U that are inserted and coupled to each other, the end plate EP of the unit frame U that is inserted inward may contact the center plate CP of the unit frame U that surrounds the unit frame U. In more detail, an upper end A3 of the left end plate EP of the first frame U1 may contact the center plate CP of the second frame U2. Also, an upper end A3' of the right end plate EP of the first frame U1 may contact the center plate CP of the second frame U2.

According to this embodiment of the present disclosure, two unit frames U may contact each other, to stably support each other. In particular, according to an embodiment of FIG. 8, an upper end of the end plate EP of the first frame U1 may support the center plate CP of the second frame U2 upward. Accordingly, the center plate CP of the second frame U2 constituting an upper plate of the module frame 200 may be prevented from being bent or deformed downward.

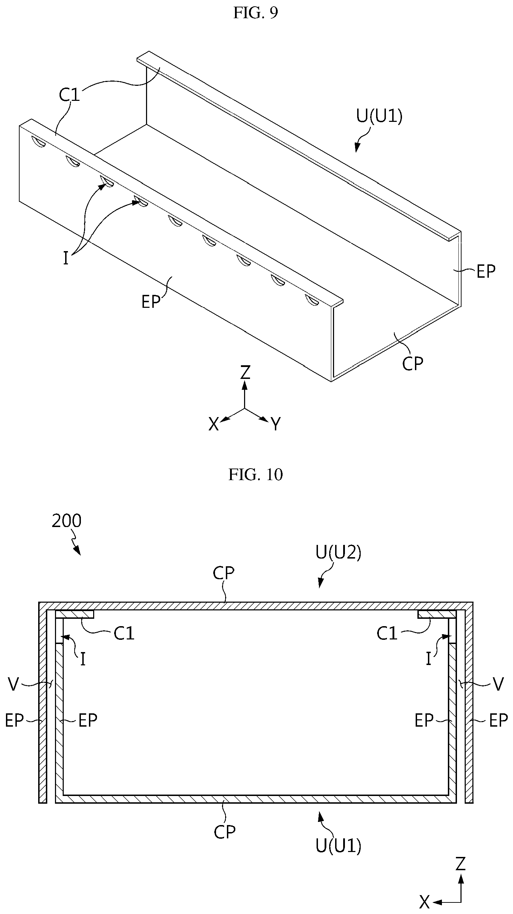

FIG. 9 is a perspective view schematically illustrating a configuration of the unit frame U, according to another embodiment of the present disclosure. FIG. 10 is a cross-sectional view schematically illustrating a configuration of the module frame 200 including the unit frame U of FIG. 9.

Referring to FIGS. 9 and 10, a first bent portion C1 may be provided at an end of the end plate EP of the unit frame U. For example, the end plate EP of the first frame U1 may be erected upward with an end (lower end) connected to the center plate CP and the other end (upper end) of the end plate EP may be bent in the horizontal direction to form the first bent portion C1. In particular, the first frame U1 is a unit frame U located at an inner position from among two unit frames U1, U2 that are coupled to each other. Accordingly, the first bent portion C1 may be formed on the end plate EP of an inner frame. Furthermore, the first bent portion C1 may be formed on the two end plates EP, respectively.

In this embodiment, the center plate CP of another unit frame U may be in surface contact with a surface of the bent portion C1 that is bent in the horizontal direction. For example, referring to an embodiment of FIG. 10, a bottom surface of the center plate CP of the second frame U2 may be seated on and contact a top surface of the upper bent portion C1 of the first frame U1.

According to this embodiment of the present disclosure, a support coupling configuration between the unit frames U may be more stably implemented. For example, in the embodiment of FIG. 10, the center plate CP of the second frame U2 may be more stably supported upward by the first bent portion C1 of the end plate EP of the first frame U1. Accordingly, in this case, structural stability of the module frame 200 may be further improved.

Also, in the embodiment, because there is a surface contact portion between the unit frames U, a fastening process may be more easily performed. For example, in an embodiment of FIG. 10, an adhesive may be applied to a top surface of the first bent portion C1 of the first frame U1, to stably adhere the top surface of the first bent portion C1 to a bottom surface of the center plate CP of the second frame U2. In another example, the first bent portion C1 of the first frame U1 and the center plate CP of the second frame U2 may be fastened to each other by applying bolting or rivet structure therebetween.

Also, according to the embodiment, a sealing force between an end of the end plate EP and the center plate CP may be increased. Accordingly, a directional venting configuration for discharging venting gas only in an intended direction may be more easily implemented.

Also, an end of the end plate EP of the second frame U2 may extend to the center plate CP of the first frame U1. For example, referring to an embodiment of FIG. 8, a lower end A4 of a left end of the second frame U2 surrounding a left outer surface of the first frame U1 may extend long to the center plate CP of the first frame U1. Also, a lower end A4' of a right end of the second frame U2 surrounding a right outer surface of the first frame U1 may extend long to the center plate CP of the first frame U1. That is, the end plate EP of the second frame U2 may extend downward with an end connected to the center plate CP, and the other end that is an extended end may be located on a portion (X-Y plane) where the center plate CP of the first frame U1 is located.

According to this embodiment of the present disclosure, a space for forming the venting channel V may be formed as wide as possible. Accordingly, while venting gas passes through the venting channel V, a temperature of the venting gas may be lowered, and external discharge of a flame or spark ejected from the battery cell 110 together with the venting gas may be suppressed as much as possible. Accordingly, the flame or spark may be prevented from causing a fire outside the battery module.

At least one of the unit frames U may have an opening. In particular, the opening may be formed in the end plate EP of the unit frame U. For example, the first frame U1 may include an opening I formed in each of two end plates EP, as shown in FIGS. 5 and 6. The end plate EP of the first frame U1 that is an inner end plate EP located at an inner position of the venting channel V may form the venting channel V together with the end plate EP of the second frame U2 that is an outer end plate EP. The opening I formed in the end plate EP of the first frame U1 may communicate between the receiving space R of the cell assembly 100 and the venting channel V. In this case, venting gas or the like ejected from the cell assembly 100 may be introduced into the venting channel V by the opening I formed in the end plate EP of the first frame U1, as marked by an arrow B2 in FIG. 5. Accordingly, the opening I formed in the end plate EP of the first frame U1 may function as an inlet of the venting channel V.

The opening may be formed by forming an uneven structure on the unit frame U. In particular, the opening I may be provided at an end of the inner end plate EP. For example, as shown in FIG. 6, the first frame U1 may be formed so that an uneven structure is formed at an upper end of the end plate EP. In this uneven structure, a portion that is relatively concave downward may form the opening. Also, in this uneven structure, portions A3 and A3' that are relatively convex upward may contact and support the center plate CP of another unit frame U, as shown in FIG. 8.

The uneven structure may be formed by cutting a part of an end of a plate, or may be formed in an uneven shape from the beginning. According to an embodiment of the present disclosure, an inlet from the receiving space R in which the cell assembly 100 is received to the venting channel V may be easily provided. Also, according to the embodiment, in order for venting gas discharged from the cell assembly 100 to be introduced into the venting channel V, the venting gas needs to move to an end along a surface of the inner end plate EP. Accordingly, because a path to the venting channel V is increased, the effect of cooling the venting gas or the effect of suppressing discharge of a flame or spark may be further improved.

A plurality of openings I may be formed in one end plate EP. For example, as shown in FIG. 6 or the like, a plurality of openings I may be formed in the left end plate EP and the right end plate EP of the first frame U1. In this case, even when venting gas or the like is generated in any portion of the receiving space of the cell assembly 100, the venting gas may be more smoothly and rapidly discharged.

Also, the opening may be formed as a central portion of the end plate EP is perforated, as shown in FIG. 9. That is, the opening may be formed as a hole by perforating a central portion, rather than cutting a part of an end as shown in FIG. 6.

The two end plates EP located at the overlapping portion may include an inlet and an outlet of the venting channel V at opposite ends. In particular, the two end plates EP constituting one venting channel V may include an inlet and an outlet for the venting channel V at opposite ends in the up-down direction. For example, referring to the embodiment of FIG. 8, an inlet of the venting channel V may be formed at an upper end, in the end plate EP of the first frame U1 that forms an inner plate of the venting channel V. An outlet of the venting channel V may be formed at a lower end, in the end plate EP of the second frame U2 that forms an outer plate of the venting channel V. Furthermore, an inlet of the venting channel V may be formed in a cut shape or a hole shape, as shown in FIG. 6 or 9. An outlet O of the venting channel V may be formed when an end of the second frame U2 is spaced apart from the end plate EP of the first frame U1 by a certain distance, as shown in FIGS. 5 and 8. In this case, as shown in FIG. 5, venting gas or the like of the venting channel V may be discharged downward from the battery module through the outlet O.

According to this embodiment of the present disclosure, a path of the venting channel V may be formed longer. In particular, in the embodiment, a path of the venting channel V may be formed long from an upper end to a lower end of the module frame 200. Hence, the effect of cooling venting gas or the like and the effect of suppressing discharge of a flame or spark may be further improved.

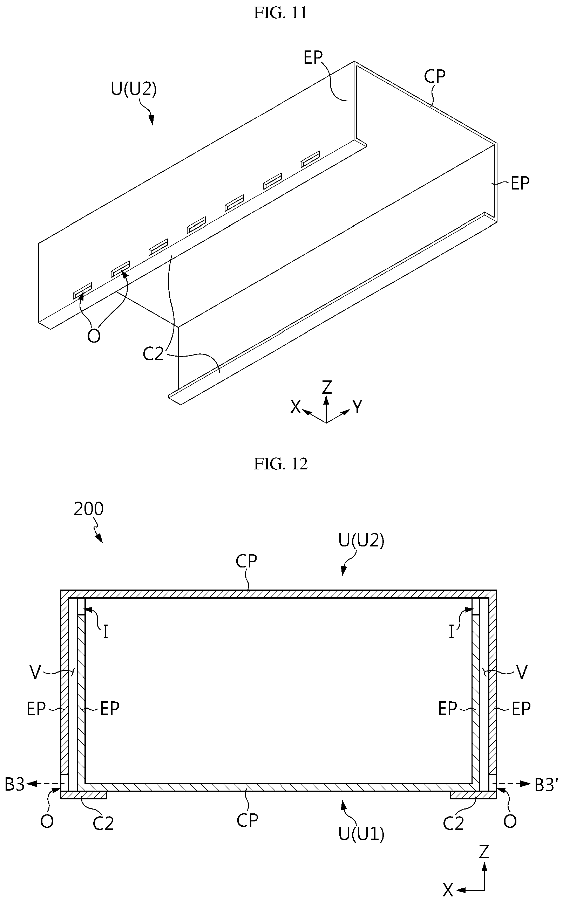

FIG. 11 is a perspective view schematically illustrating a configuration of the unit frame U, according to still another embodiment of the present disclosure. FIG. 12 is a cross-sectional view schematically illustrating a configuration of the module frame 200 including the unit frame U of FIG. 11.

Referring to FIGS. 11 and 12, the end plate EP of the second frame U2 may surround at least a part of the center plate CP of the first frame U1. In particular, the end plate EP of the second frame U2 may overlap the end plate EP of the first frame U1 to form the venting channel V, and the end plate EP of the second frame U2 may be located outside the first frame U1. Accordingly, the second frame U2 may be an outer frame. The second frame U2 may be coupled to the first frame U1 by moving from an upper side toward the first frame U1.

In this embodiment, the end plate EP of the second frame U2 may extend downward from the center plate CP of the second frame U2, and a second bent portion C2 that is bent inward may be formed at a lower end of the end plate EP of the second frame U2. The second bent portion C2 may surround an outer surface of the center plate CP of the first frame U1, in particular, a lower portion of the center plate CP of the first frame U1, as shown in FIG. 12. In this case, the second bent portion C2 may be a lower bent portion provided on the end plate EP of the second frame U2.

According to this embodiment of the present disclosure, because an upper end and a lower end of the first frame U1 are supported by the second frame U2, a coupling force between the first frame U1 and the second frame U2 may be further improved. Also, in this case, the first frame U1 may be coupled by sliding into an inner space of the second frame U2. That is, upper, lower, left, and right sides of an inner space of the second frame U2 may be defined by the center plate CP, the end plate EP, and the second bent portion C2 of the end plate EP. In this case, the first frame U1 may slide into the inner space in the front-back direction (Y axis direction) to be inserted into the inner space of the second frame U2. In this case, the first frame U1 and the second frame U2 may be more easily assembled, and a more stable coupling structure may be provided. In another example, the second bent portion C2 of the second frame U2 may be formed by being inserted into the first frame U1 and then being bent.

In an embodiment of FIGS. 11 and 12, an opening O may be formed in the end plate EP of the second frame U2. Because the second frame U2 is located outside the venting channel V, the opening O formed in the second frame U2 may function as an outlet of the venting channel V. Accordingly, venting gas or the like introduced into the venting channel V may be discharged to the outside through the outlet O, as marked by arrows B3 and B3' in FIG. 12. The outlet O formed in the end plate EP of the second frame U2 may be a hole formed when a part of the end plate EP is perforated, as shown in FIGS. 11 and 12. In another example, the outlet O formed in the end plate EP of the second frame U2 may be formed as an uneven portion at an end of the end plate EP, like the inlet I formed in the end plate EP of the first frame U1 of FIG. 6.

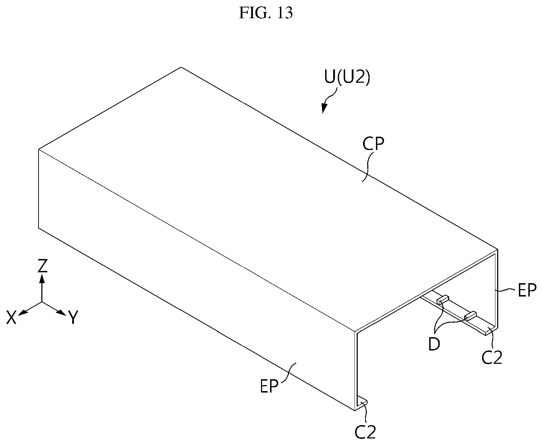

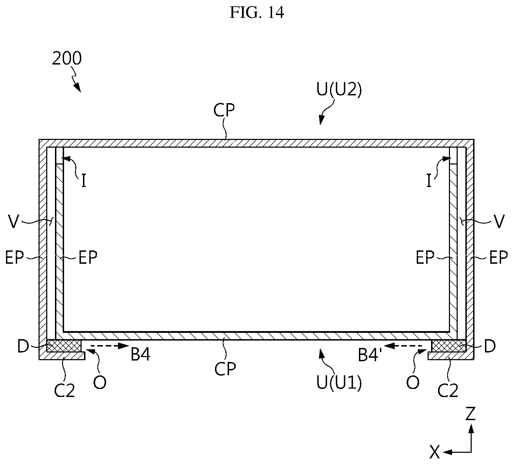

FIG. 13 is a perspective view schematically illustrating a configuration of the unit frame U, according to still another embodiment of the present disclosure. FIG. 14 is a cross-sectional view schematically illustrating a configuration of the module frame 200 including the unit frame U of FIG. 13.

Referring to an embodiment of FIG. 13, like in the embodiment of FIG. 11, the second end portion C2 extends to be bent inward in the horizontal direction at a lower end of each of a two end plates EP of the second frame U2. A support protrusion D protruding upward may be provided on an inner surface, that is, an upper surface, of the second bent portion C2.

The support protrusion D may support the center plate CP of the first frame U1 upward, in a state where the second frame U2 is coupled to the first frame U1. Also, the support protrusion D may be provided only on a part of the inner surface of the second bent portion C2. Furthermore, a plurality of support protrusions D may be provided on the second bent portion C2. The plurality of support protrusions D may be spaced apart from each other in the front-back direction (Y axis direction) on one second bent portion C2.

In this embodiment, the support protrusion D may support the center plate CP of the first frame U1, to form an empty space between the center plate CP of the first frame U1 and the second bent portion C2. For example, a space between the plurality of support protrusions D provided on one second bent portion C2 may be a space that separates the center plate CP of the first frame U1 from the second bent portion C2.

In this embodiment, an outlet of the venting channel V may not be provided in the second frame U2. That is, as shown in FIG. 14, a separation space between the second bent portion C2 of the second frame U2 and the center plate CP of the first frame U1 may be formed by the support protrusion D, and the separation space may function as the outlet O. Accordingly, a separate opening or the like for functioning as an outlet does not need to be formed in the end plate EP of the second frame U2. In this case, venting gas or the like introduced into the venting channel V may be discharged to the outlet O between the second bent portion C2 of the second frame U2 and the center plate CP of the first frame U1, as marked by arrows B4 and B4' in FIG. 14.

In particular, in the embodiment, venting gas discharged to the outside may be suppressed from moving toward another battery module. That is, referring to an embodiment of FIG. 14, venting gas at the outlet O located on a left side of the module frame 200 may be discharged rightward (direction of the arrow B4) along an outer surface of the center plate CP of the first frame U1. Venting gas at the outlet O located on a right side of the module frame 200 may be discharged leftward (direction of the arrow B4') along the outer surface of the center plate CP of the first frame U1. In this case, venting gas or the like may not be directly discharged toward other battery modules located adjacent to a left side or a right side of the battery module. Accordingly, thermal runaway propagation between battery modules due to discharge of venting gas or flame may be more effectively prevented.

Furthermore, as in the embodiment, when the outlet O is formed at a lower portion of the battery module and venting gas is discharged downward from the battery module, high-temperature venting gas or flame may be blocked from moving toward an element or a user located over the battery module. Accordingly, for example, when a passenger is located over a battery module that is mounted in a vehicle, venting gas or flame is blocked from being discharged toward the passenger, thereby further improving the safety of the passenger.

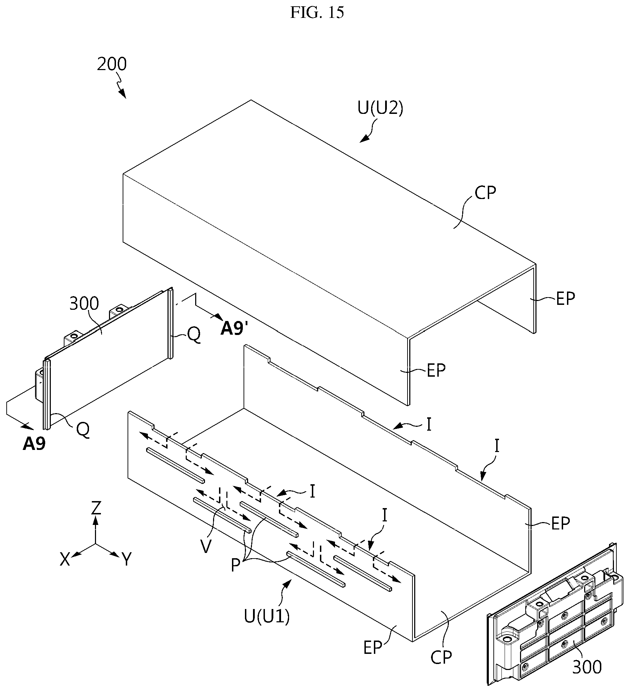

FIG. 15 is an exploded perspective view schematically illustrating some elements of a battery module, according to still another embodiment of the present disclosure.

Referring to FIG. 15, in the module frame 200, a protrusion may be formed on an inner surface of the venting channel V. In more detail, a passage protrusion P may be formed on an outer surface of the end plate EP of the first frame U1. The passage protrusion P may protrude from a surface of the unit frame U toward the venting channel V. For example, because the venting channel V is located outside the end plate EP of the first frame U1, the passage protrusion P may protrude outward from an outer surface.

According to this embodiment of the present disclosure, a flow of venting gas may be guided by the passage protrusion P in the venting channel V. Furthermore, according to the embodiment, a flow path of venting gas in the venting channel V may not be formed only in a straight line, but may be bent one or more times as marked by an arrow in FIG. 15. Also, according to the embodiment, a flow path of venting gas in the venting channel V may be formed long. Accordingly, when venting gas flows through the venting channel V, a temperature of the venting gas may be lowered and external discharge of a spark or particles having high linearity may be suppressed.

In particular, a shape or an arrangement of the passage protrusion P may be changed in various ways, and the effect of cooling venting gas or suppressing a spark or the like may be further improved due to the passage protrusion P.

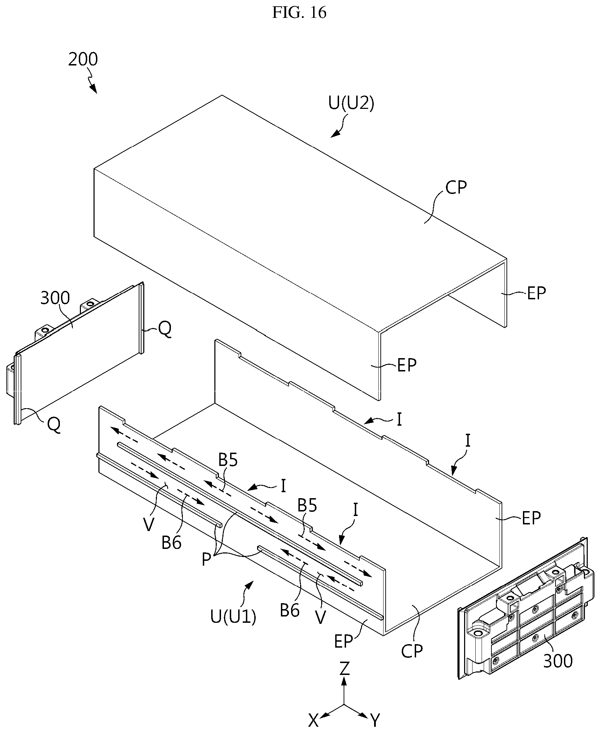

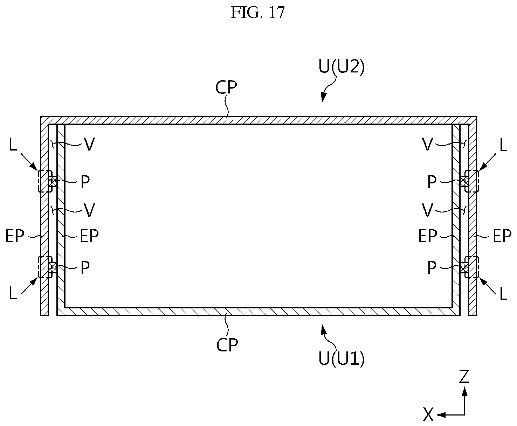

FIG. 16 is an exploded perspective view schematically illustrating some elements of a battery module, according to still another embodiment of the present disclosure. Also, FIG. 17 is a cross-sectional view schematically illustrating a configuration of the module frame 200 including the unit frame U of FIG. 16.

Referring to FIGS. 16 and 17, the venting channel V may be configured so that a flow direction of a fluid is perpendicular to a direction in which the plurality of unit frames U are coupled to each other. In particular, the venting channel may be configured so that a flow direction of venting gas is the horizontal direction, when a plurality of unit frames U are coupled to each other in a vertical direction. To this end, the passage protrusion P protruding outward in the horizontal direction toward the venting channel V may be formed on an outer surface of the end plate EP of the first frame U1 located inside the venting channel V. In this case, the passage protrusion P may extend long in the front-back direction (Y axis direction) that is the horizontal direction, on the end plate EP of the first frame U1.

Also, the passage protrusion P may contact an inner end of another unit frame U that forms the venting channel V together. For example, the passage protrusion P provided on the end plate EP of the first frame U1 may contact a portion L of an inner surface of the end plate EP of the second frame U2, as shown in FIG. 17.

Accordingly, in a configuration where the first frame U1 and the second frame U2 are coupled to each other in the up-down direction (vertical direction), a flow direction of venting gas may be the front-back direction, perpendicular to a coupling direction (up-down direction), due to the passage protrusion P. In more detail, venting gas, flame, or spark introduced into the venting channel V through the inlet I formed in the end plate EP of the first frame U1 may flow in the front-back direction (horizontal direction), as marked by arrows B5 and B6, due to the passage protrusion P. In particular, the first frame U1 and the second frame U2 may be formed long in the front-back direction. A flow direction of venting gas may be the front-back direction that is a longitudinal direction of the first frame U1 and the second frame U2. Accordingly, in this case, because a venting path is formed as long as possible, the effect of cooling venting gas or suppressing a spark or the like may be further improved.

Also, the passage protrusion formed on the unit frame U may be configured so that a flow of venting gas in the venting channel V is changed to an opposite direction. For example, in an embodiment of FIG. 16, venting gas or the like introduced into the venting channel V through the inlet I may flow as marked by the arrow B5, due to an extension direction of the upper passage protrusion P and a position of the inlet I. The venting gas or the like may be changed to a direction as marked by the arrow B6, which is opposite to the direction of the arrow B5, due to an extension direction of the lower passage protrusion P and a position of the outlet O.

According to this embodiment of the present disclosure, a path through which venting gas or the like is discharged may be further increased.

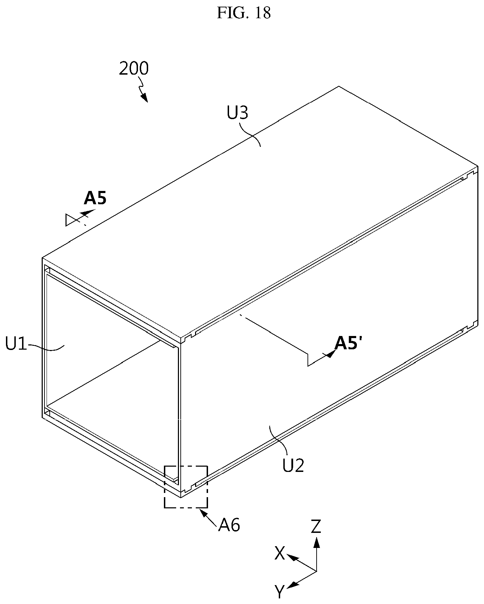

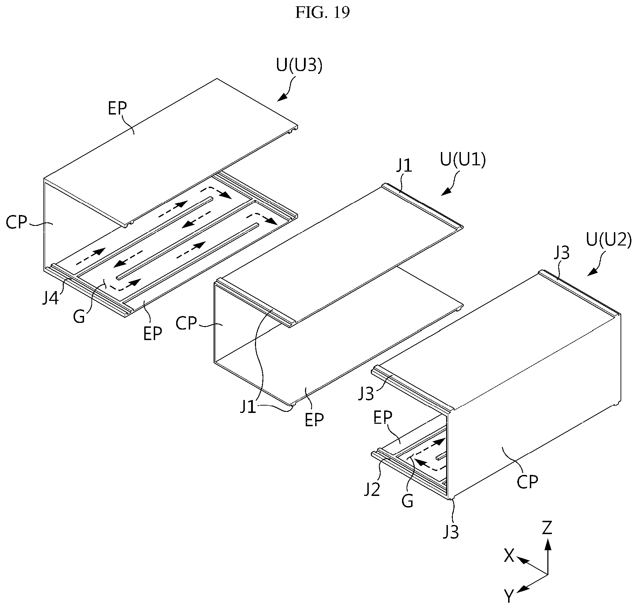

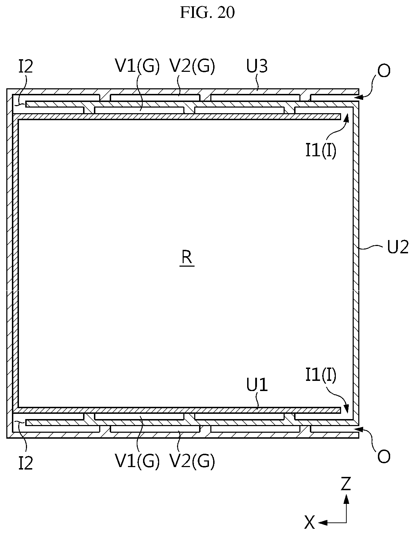

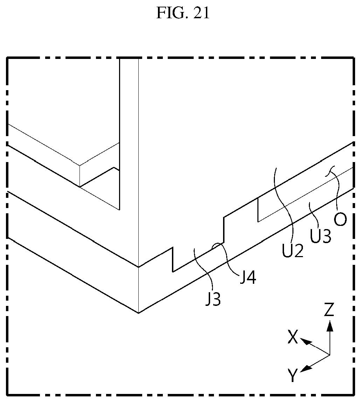

FIG. 18 is a perspective view schematically illustrating a configuration of the module frame 200, according to still another embodiment of the present disclosure. FIG. 19 is an exploded perspective view illustrating the configuration of FIG. 18. FIG. 20 is a cross-sectional view taken along line A5-A5' of FIG. 18. Also, FIG. 21 is an enlarged view illustrating a portion A6 of FIG. 18.

Referring to FIGS. 18 to 21, the module frame 200 may include a plurality of unit frames U, and the plurality of unit frames U may further include a third frame U3, in addition to the first frame U1 and the second frame U2. That is, the module frame 200 of the battery module according to the present disclosure may include three or more unit frames U that are inserted and coupled to each other. In more detail, at least a part of the first frame U1 may be inserted into the second frame U2, and at least a part of the second frame U2 may be inserted into the third frame U3. In this case, the first frame U1 and the second frame U2 may be inserted together into an inner space of the third frame U3.

The third frame U3 may include the center plate CP and the end plate EP, like the first frame U1 and the second frame U2. Furthermore, the third frame U3 may include one center plate CP and two end plates EP that are bent at 90° from both ends of the center plate CP. The center plate CP of the third plate U3 may be larger than the center plate CP of the second frame U2. Accordingly, the first frame U1 and the second frame U2 may be inserted together into a space between the two end plates EP formed at both ends of the center plate CP of the third frame U3.

Also, the plurality of unit frames U provided in the module frame 200 may be inserted and coupled to each other in the horizontal direction. That is, although the first frame U1 and the second frame U2 are coupled to each other in the vertical direction (up-down direction) in the above drawings, the plurality of unit frames U may be coupled to each other in the horizontal direction (left-right direction) as in an embodiment of FIGS. 18 to 21.

When three unit frames U are inserted and coupled to each other as in the embodiment, the first frame U1 that is located at an innermost position and the third frame U3 that is located at an outermost position may be open in the same direction, and the second frame U2 that is located at the center may be open in the opposite direction. For example, as shown in FIGS. 19 and 20, inner spaces of the first frame U1 and the third frame U3 may be open rightward, and an inner space of the second frame U2 may be open leftward.

According to this embodiment of the present disclosure, because at least a side surface of the module frame 200 is formed in a multi-structure, the cell assembly 100 accommodated in the inner space may be more reliably protected. For example, referring to FIG. 20, when the cell assembly 100 is accommodated in the receiving space R, an upper portion and a lower portion of the cell assembly 100 may be protected in a triple structure, and a left portion of the cell assembly 100 may be protected in a double structure. Hence, the effect of protecting the cell assembly 100 against impact or the like applied to the side portions may be improved. Also, such multiple side walls may further improve the effect of blocking a flame or the like generated from the cell assembly 100.

Also, according to the embodiment, a venting path may be formed longer. For example, referring to FIG. 20, a first channel V1 may be formed between the first frame U1 and the second frame U2, and a second channel V2 may be formed between the second frame U2 and the third frame U3. The first channel V1 and the second channel V2 may communicate with each other, and thus, venting gas ejected from the receiving space R may be introduced into the venting channel V through the inlet I and then discharged to the outlet O by sequentially passing through the first channel V1 and the second channel V2. In this case, the venting channel V may be formed in a multi-layer structure in a thickness direction of the module frame 200. Accordingly, because a venting path is formed very long, the effect of cooling venting gas or the effect of suppressing a flame or spark may be further improved.

Also, in the embodiment, the venting path may be more easily bent. In particular, as shown in FIG. 20, an inlet I1 of the first channel V1 may be formed at a right end of the end plate EP of the first frame U1, and an inlet I2 of the second channel V2 may be formed at a left end of the end plate EP of the second frame U2. Also, the outlet O of the second channel V2 may be formed at a right end of the end plate EP of the third frame U3.

In this case, flow directions of venting gas in the first channel V1 and the second channel V2 may be opposite to each other. Accordingly, the effect of collecting a spark or flame or the effect of suppressing discharge of the spark or flame may be further improved.

A passage groove G may be formed in a surface of at least one of the plurality of unit frames U provided in the module frame 200, as shown in FIG. 19. The passage groove G may be formed in a surface of at least some of a unit frame U facing the venting channel V. In particular, the passage groove G may be concave inward in a thickness direction of the unit frame U. The passage groove G may substantially form the venting channel V so that venting gas flows in a space between the unit frames U. That is, the end plates EP of the unit frames U may contact each other, and venting gas may move along the passage groove G that is concave in the end plate EP.

Furthermore, the passage groove G may be formed long in a direction perpendicular to a coupling direction between the unit frames U. Also, the passage groove G may extend along a longest edge of the unit frame U, like the passage protrusion P. For example, referring to FIG. 19, the plurality of unit frames U may be coupled to each other in the left-right direction (X axis direction) to have a long edge in the front-back direction (Y axis direction). In this case, the passage groove G may extend long in the front-back direction that is a longitudinal direction of the unit frame U.

As such, the module frame 200 may be configured so that venting gas flows in the longitudinal direction in which a longest edge is formed from among several directions. For example, in an embodiment of FIGS. 18 to 21, a longitudinal direction of the module frame 200 may be the front-back direction (Y axis direction). In this case, the venting channel V may be provided so that venting gas flows in the front-back direction.

According to this embodiment of the present disclosure, a path through which venting gas is discharged may be formed long. For example, in FIG. 19, venting gas introduced into the first channel V1 between the first frame U1 and the second frame U2 may flow long in the front-back direction (Y axis direction) along the passage groove G, as marked by an arrow.

Furthermore, the passage groove G may be configured so that, when venting gas flows, a flow of the venting gas is changed to an opposite direction in the longitudinal direction. For example, in an embodiment of FIG. 19, a direction of venting gas may be changed so that venting gas flows forward (+Y axis direction) and then flows backward again, in a space between the first frame U1 and the second frame U2. In addition, such a direction change may also occur in a space between the second frame U2 and the third frame U3. Hence, in this case, a venting path of venting gas may be significantly increased, and the effect of suppressing discharge of a flame, spark, or particles having high linearity may be greatly improved.

In the battery module according to the present disclosure, at least some of the plurality of unit frames U that are coupled to each other may include a coupling guide portion. The coupling guide portion for guiding assembly or coupling between different unit frames U may be formed as a protrusion, a groove, or a hook that may be fitted.

For example, referring to FIG. 19, the first frame U1 and the second frame U2 may include coupling guide portions corresponding to each other. In more detail, first guide portions J1 that protrude long in the coupling direction may be provided on outer surfaces (an upper outer surface and a lower outer surface) of the end plates EP of the first frame U1. Second guide portions J2 that protrude long in the coupling direction may be provided on inner surfaces (an upper inner surface and a lower inner surface) of the end plates EP of the second frame U2 so that the first guide portions J1 are slidably inserted into the second guide portions J2.

Also, referring to FIGS. 19 and 21, third guide portions J3 that protrude long in the coupling direction may be provided on outer surfaces (an upper outer surface and a lower outer surface) of the end plates EP of the second frame U2. Fourth guide portions J4 may be provided on inner surfaces (an upper inner surface and lower inner surface) of the end plates EP of the third frame U3 so that the third guide portions J3 are slidably inserted into the fourth guide portions J4. Accordingly, when the second frame U2 and the third frame U3 are coupled to each other, the third guide portions J3 and the fourth guide portions J4 may be inserted and coupled to each other, as shown in FIG. 21.

According to this embodiment of the present disclosure, when a plurality of unit frames U are assembled, because an assembly position and direction are guided, assemblability may be improved. Also, according to the embodiment, because a relative movement between the plurality of unit frames U after coupling is restricted, a coupling force may be further increased.

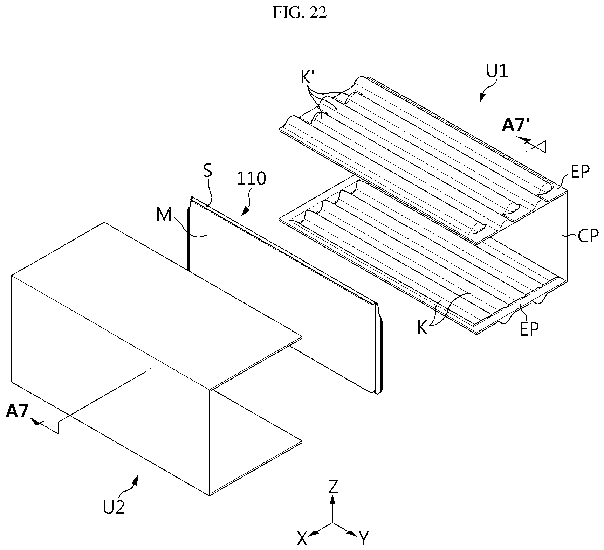

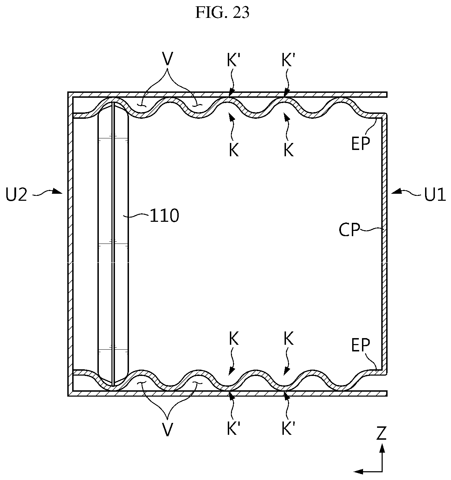

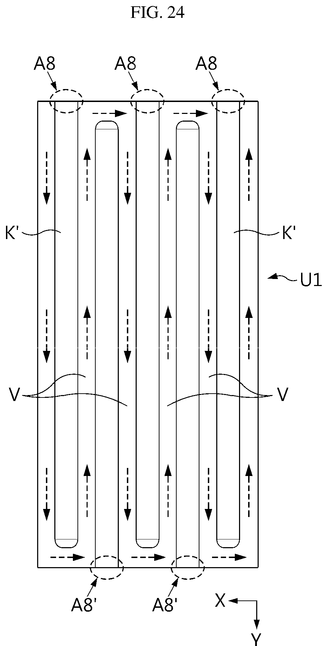

FIG. 22 is an exploded perspective view schematically illustrating some elements of a battery module, according to still another embodiment of the present disclosure. Also, FIG. 23 is a cross-sectional view illustrating a state where the elements of FIG. 22 are coupled to each other. For example, FIG. 23 may be a cross-sectional view illustrating the battery module of FIG. 22, taken along line A7-A7'. For convenience of explanation, although only one battery cell 110 is illustrated in FIGS. 22 and 23, a plurality of battery cells 110 may be included. FIG. 24 is a view illustrating the first frame U1, in the battery module of FIG. 22, viewed from the top.

First, referring to FIGS. 22 and 23, the first frame U1 that is the unit frame U that is located at an innermost position in the module frame 200 may include a mounting groove K. An end of the battery cell 110 may be seated in the mounting groove K. The mounting groove K may be formed in a part of the unit frame U, for example, an inner surface of the end plate EP. In particular, a part of the battery cell 110, for example, an upper end or a lower end, may be seated in the mounting groove K. For example, when the battery cell 110 is a pouch-type cell, the battery cell 110 may include a receiving portion M, and a sealing portion S surrounding an edge of the receiving portion M. In this case, when the battery cell 110 is accommodated in an inner space of the first frame U1 while being erected in the up-down direction, the upper sealing portion S and the lower sealing portion S of the battery cell 110 may be inserted into the mounting grooves K formed in the upper end plate EP and the lower end plate EP of the first frame U1. Also, the receiving portion M of the battery cell 110 may have a width greater than that of the sealing portion S, and an upper end and a lower end of the receiving portion M may be seated in the mounting grooves K of the first frame U1.

The first frame U1 may protrude inward from a portion where the mounting groove K is formed and outward toward the venting channel V. That is, the mounting groove K may be concave on an inner surface facing the battery cell 110 in the first frame U1, but the concave portion may protrude on an outer surface of the first frame U1 to form a protrusion K'. In particular, the first frame U1 may be formed in a thin plate shape, and in this case, in order to form the mounting groove K in an inner surface, an outer surface may protrude along a shape of the mounting groove K. In particular, the venting channel V may be located on the outer surface of the first frame U1, as shown in FIG. 23. Accordingly, the mounting groove K of the first frame U1 may form the protrusion K' that protrudes toward the venting channel V.

Furthermore, referring to an embodiment of FIGS. 22 and 24, a plurality of protrusions K' formed on the opposite side by the mounting groove K may be arranged in a stacking direction of the battery cells 110, and ends in a longitudinal direction may be alternately located. For example, in an embodiment of FIG. 24, when a plurality of protrusions K' are arranged from a left side to a right side, ends A8 of the protrusions K' located at odd-numbered positions from the left side may extend long to a rear end of the end plate EP. Ends A8' of the protrusions K' located at even-numbered positions from the left side may extend long to a front end of the end plate EP. In this case, in the venting channel V provided outside the end plate EP of the first frame U1, a forward flow of venting gas and a rearward flow of venting gas may be alternately formed.

According to this embodiment of the present disclosure, assemblability and coupling of the module frame 200 and the cell assembly 100 may be improved and a venting path may be formed longer. In particular, in the embodiment, a configuration on which the battery cell 110 is seated may even function to set a guide path of the venting channel V. Accordingly, in the module frame 200, a seating configuration of the battery cell 110 and a path guide configuration of the venting channel V do not need to be separately provided. Accordingly, a structure of the module frame 200 may be simplified and a volume and a weight may be reduced. Hence, energy density of the battery module may be improved and cost may be reduced. Also, in this case, productivity of the battery module may be further improved.

The battery module according to the present disclosure may further include an end frame 300.

The end frame 300 may be configured to close an open end of the module frame 200, as shown in FIGS. 2 and 15. In particular, a specific end of the module frame 200 may be open to form an open end, in a state where a plurality of unit frames U are inserted and coupled to each other. For example, as shown in FIG. 2 or 15, the first frame U1 and the second frame U2 each having a U-frame shape may be coupled to each other in the up-down direction in a state where upper and lower open ends face each other, and a front side and a rear side of the module frame 200 may be open. Two end frames 300, that is, a front frame and a rear frame, may be coupled to the front open end and the rear open end of the module frame 200.

The end frame 300 may be coupled to an open end of the module frame 200 to seal a corresponding space. Accordingly, when venting gas or flame is ejected from the cell assembly 100 accommodated in the module frame 200, the venting gas or flame may move and discharged to the venting channel V without being discharged to front and rear open ends of the module frame 200.

Also, the end frame 300 may include a configuration for electrically connecting the battery module to an external element. For example, the end frame 300 may include a module terminal for transmitting and receiving charging/discharging power of the battery module and/or a connector terminal for transmitting and receiving various information of the battery module.

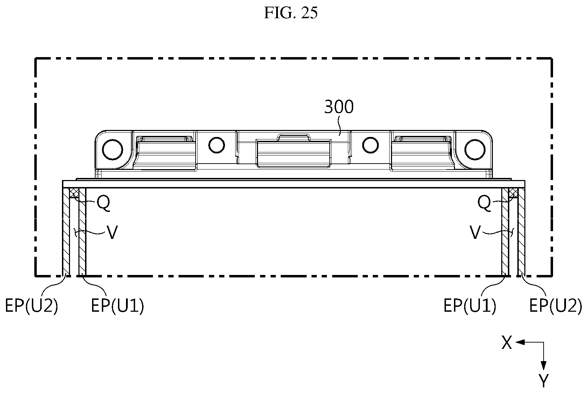

The end frame 300 may include an end guide portion Q, as shown in FIG. 15. A configuration of the end guide portion Q will be described in more detail with further reference to FIG. 25.

FIG. 25 is a top cross-sectional view schematically illustrating some elements of a battery module, according to still another embodiment of the present disclosure. For example, FIG. 25 may be a cross-sectional view illustrating a configuration of coupling the battery module of FIG. 15, taken along line A9-A9'.

Referring to FIGS. 15 and 25, in the battery module according to the present disclosure, the end guide portion Q may be configured to guide an insertion position of the unit frame U. For example, the end guide portion Q may protrude inward, in other words, toward the module frame 200, from an inner surface of the end frame 300. In more detail, the end guide portion Q may be formed on an inner surface (front surface) of the end frame 300 coupled to a rear open end. The end guide portion Q may protrude toward a front side where a receiving space of the cell assembly 100 is located. Also, the end guide portion Q may extend long in the up-down direction, as shown in FIG. 15.

In this embodiment, the unit frame U may be coupled to both sides of the end guide portion Q. In particular, referring to an embodiment of FIG. 25, the end plate EP of the first frame U1 located inside may be fixedly attached to an inner surface of the end guide portion Q. Also, the end plate EP of the second frame U2 located outside may be fixedly attached to an outer surface of the end guide portion Q. In this case, an end of the end plate EP and the end guide portion Q may fixedly contact each other by using any of various fastening methods such as fitting, adhesion, bolding or welding.

According to this embodiment, a coupling position between the first frame U1 and the second frame U2 may be guided by the end guide portion Q. Accordingly, assemblability and coupling between the first frame U1 and the second frame U2 may be further improved. Also, according to the embodiment, in a state where the first frame U1 and the second frame U2 are coupled to each other to form the module frame 200, the venting channel V formed between the first frame U1 and the second frame U2 may be stably maintained. For example, in the embodiment of FIG. 25, the end guide portion Q may more stably maintain a left-right separation distance with respect to the venting channel V between the end plate EP of the first frame U1 and the end plate EP of the second frame U2.

Accordingly, even when pressure or impact is applied, deformation or the like of the venting channel V may be prevented, and venting performance above a certain level may be ensured. Furthermore, when venting gas or the like is generated in the battery cell 110, the end plate EP of the first frame U1 that is located on an inner side may be pushed toward the venting channel V. However, in the embodiment, because the end guide portion Q prevents the end plate EP of the first end frame U1 from being pushed and maintains a position of the end plate EP, the venting channel V may be stably ensured.

Although the end guide portion Q protrudes in an embodiment of FIGS. 15 and 25, the end guide portion Q may be formed in any of various other shapes such as a groove shape. In particular, when the end guide portion Q is formed in a groove shape, a separate element that may be inserted into the end guide portion Q may be provided on the unit frame U.

A battery pack according to an aspect of the present disclosure may include one or more battery modules according to the present disclosure. Also, the battery pack according to the present disclosure may include various other elements of a battery pack, for example, as a control unit such as a battery management system (BMS), a bus bar between modules, a pack case, a relay, or a current sensor, well known at the time of filing the present application, in addition to the battery module.

The battery module or the battery pack according to the present disclosure may be applied to a vehicle such as an electric vehicle or a hybrid vehicle. That is, a vehicle according to the present disclosure may include the battery module according to the present disclosure or the battery pack according to the present disclosure. Also, the vehicle according to the present disclosure may include various other elements included in a vehicle in addition to the battery module or the battery pack. For example, the vehicle according to the present disclosure may further include a vehicle body, a motor, and a control device such as an electronic control unit (ECU) in addition to the battery module according to the present disclosure.

Also, the battery module according to the present disclosure may be applied to an energy storage system (ESS). That is, an ESS according to the present disclosure may include the battery module according to the present disclosure or the battery pack according to the present disclosure.

While one or more embodiments of the present disclosure have been described with reference to the embodiments and figures, the present disclosure is not limited thereto, and it will be understood by one of ordinary skill in the art that various changes in form and details may be made therein without departing from the scope of the present disclosure as defined by the following claims.

### [Description of Reference Numerals]

100: cell assembly
110: battery cell
200: module frame
300: end frame
U: unit frame
U1: first frame, U2: second frame, U3: third frame
CP: center plate, EP: end plate
R: receiving space
V: venting channel
D: support protrusion
P: passage protrusion
G: passage groove
K: mounting groove
Q: end guide portion

## Claims

1. A battery module comprising:
a cell assembly (100) comprising at least one battery cell (110); and
a module frame (200) comprising a plurality of unit frames (U) that are inserted and coupled to each other, an inner space (R) in which the cell assembly is accommodated, and a venting channel (V) provided in an overlapping portion formed through the insertion, wherein each of the plurality of unit frames (U) comprises a center plate (CP), and two end plates (EP) integrally formed with the center plate (CP) and bent at both ends of the center plate (CP),
wherein
at least one of the plurality of unit frames (U) comprises an opening formed in the end plates (EP),
wherein
the unit frame (U) comprises an uneven structure formed at an end of the end plates (EP) to form the opening, and
wherein
the plurality of unit frames comprise a first frame, and a second frame comprising the center plate having a width greater than a width of the center plate of the first frame, **characterised in that** the unit frames (U) are formed by bending both ends of a plate which lies down in the horizontal direction, upward at about 90°.

2. The battery module according to claim 1, wherein at least a part of the end plates (EP) provided in the first frame (U1) contacts the center plate (CP) of the second frame (U2).

3. The battery module according to claim 1, wherein an end of the end plates of the second frame extends to the center plate of the first frame.

4. The battery module according to claim 1, wherein the end plates of the second frame surrounds at least a part of the center plate of the first frame.

5. The battery module according to claim 1, wherein the plurality of unit frames further comprise a third frame comprising the center plate having a width greater than a width of the center plate of the second frame.

6. The battery module according to claim 1, wherein the first frame comprises a mounting groove formed in an inner surface so that an end of the at least one battery cell is seated in the mounting groove, wherein the mounting groove protrudes toward the venting channel.

7. The battery module according to claim 1, wherein two end plates located at the overlapping portion comprise an inlet and an outlet of the venting channel at opposite ends.

8. The battery module according to claim 1, wherein the venting channel is configured so that a flow direction of a fluid is perpendicular to a direction in which the plurality of unit frames are coupled to each other.

9. The battery module according to claim 1, further comprising an end frame configured to close an open end, in a state where the plurality of unit frames are inserted and coupled to each other,
wherein the end frame comprises an end guide portion configured to guide insertion positions of the plurality of unit frames.

10. A battery pack comprising the battery module according to any one of claims 1 through 9.

11. A vehicle comprising the battery module according to any one of claims 1 through 9.

## Patentansprüche

1. Batteriemodul, umfassend:
eine Zellenanordnung (100), welche wenigstens eine Batteriezelle (110) umfasst; und
einen Modulrahmen (200), welcher eine Mehrzahl von Einheitsrahmen (U), welche eingesetzt und miteinander gekoppelt sind, einen inneren Raum (R), in welchem die Zellenanordnung aufgenommen ist, und einen Entlüftungskanal (V) umfasst, welcher in einem überlappenden Abschnitt bereitgestellt ist, der durch den Einsatz gebildet ist, wobei jeder der Mehrzahl von Einheitsrahmen (U) eine Mittelplatte (CP) und zwei Endplatten (EP) umfasst, welche integral mit der Mittelplatte (CP) gebildet sind und an beiden Enden der Mittelplatte (CP) gebogen sind,
wobei wenigstens einer der Mehrzahl von Einheitsrahmen (U) eine Öffnung umfasst, welche in den Endplatten (EP) gebildet ist,
wobei der Einheitsrahmen (U) eine ungleichmäßige Struktur umfasst, welche an einem Ende der Endplatten (EP) gebildet ist, um die Öffnung zu bilden, und
wobei die Mehrzahl von Einheitsrahmen einen ersten Rahmen und einen zweiten Rahmen umfassen, welcher die Mittelplatte umfasst, welche eine Breite aufweist, die größer als eine Breite der Mittelplatte des ersten Rahmens ist, **dadurch gekennzeichnet, dass** die Einheitsrahmen (U) durch ein Biegen beider Enden einer Platte gebildet sind, welche in der horizontalen Richtung nach oben geneigt um etwa 90° liegt.

2. Batteriemodul nach Anspruch 1, wobei wenigstens ein Teil der Endplatten (EP), welche in dem ersten Rahmen (U1) bereitgestellt sind, die Mittelplatte (CP) des zweiten Rahmens (U2) kontaktiert.

3. Batteriemodul nach Anspruch 1, wobei sich ein Ende der Endplatten des zweiten Rahmens zu der Mittelplatte des ersten Rahmens erstreckt.

4. Batteriemodul nach Anspruch 1, wobei die Endplatten des zweiten Rahmens wenigstens einen Teil der Mittelplatte des ersten Rahmens umgeben.

5. Batteriemodul nach Anspruch 1, wobei die Mehrzahl von Einheitsrahmen ferner einen dritten Rahmen umfassen, welcher die Mittelplatte umfasst, welche eine Breite aufweist, die größer als eine Breite der Mittelplatte des zweiten Rahmens ist.

6. Batteriemodul nach Anspruch 1, wobei der erste Rahmen eine Montagenut umfasst, welche in einer inneren Fläche gebildet ist, so dass ein Ende der wenigstens einen Batteriezelle in der Montagenut aufgenommen ist, wobei die Montagenut in Richtung des Entlüftungskanals vorsteht.

7. Batteriemodul nach Anspruch 1, wobei zwei Endplatten, welche an dem überlappenden Abschnitt angeordnet sind, an entgegengesetzten Enden einen Einlass und einen Auslass des Entlüftungskanals umfassen.

8. Batteriemodul nach Anspruch 1, wobei der Entlüftungskanal derart eingerichtet ist, dass eine Strömungsrichtung eines Fluids senkrecht zu einer Richtung ist, in welcher die Mehrzahl von Einheitsrahmen miteinander gekoppelt ist.

9. Batteriemodul nach Anspruch 1, ferner umfassend einen Endrahmen, welcher dazu eingerichtet ist, in einem Zustand, in welchem die Mehrzahl von Einheitsrahmen eingesetzt und miteinander gekoppelt sind, ein offenes Ende zu schließen,
wobei der Endrahmen einen Endführungsabschnitt umfasst, welcher dazu eingerichtet ist, Einsatzabschnitte der Mehrzahl von Einheitsrahmen zu führen.

10. Batteriepack, umfassend das Batteriemodul nach einem der Ansprüche 1 bis 9.

11. Fahrzeug, umfassend das Batteriemodul nach einem der Ansprüche 1 bis 9.

## Revendications

1. Module de batterie comprenant :
un ensemble d'éléments (100) comprenant au moins un élément de batterie (110) ; et
un cadre de module (200) comprenant une pluralité de cadres unitaires (U) qui sont insérés et couplés les uns aux autres, un espace intérieur (R) dans lequel l'ensemble d'éléments est logé, et un canal de ventilation (V) ménagé dans une partie de chevauchement formée par l'insertion, dans lequel chacun de la pluralité de cadres unitaires (U) comprend une plaque centrale (CP) et deux plaques d'extrémité (EP) faisant corps avec la plaque centrale (CP) et courbées aux deux extrémités de la plaque centrale (CP),
dans lequel au moins l'un de la pluralité de cadres unitaires (U) comprend une ouverture formée dans les plaques d'extrémité (EP),
dans lequel le cadre unitaire (U) comprend une structure irrégulière formée à une extrémité des plaques d'extrémité (EP) afin de former l'ouverture, et
dans lequel la pluralité de cadres unitaires comprennent un premier cadre, et un deuxième cadre comprenant la plaque centrale présentant une largeur supérieure à une largeur de la plaque centrale du premier cadre, **caractérisé en ce que** les cadres unitaires (U) sont formés par pliage des deux extrémités d'une plaque qui s'étend dans la direction horizontale, vers le haut à environ 90°.

2. Module de batterie selon la revendication 1, dans lequel au moins une partie des plaques d'extrémité (EP) disposées dans le premier cadre (U1) entre en contact avec la plaque centrale (CP) du deuxième cadre (U2).

3. Module de batterie selon la revendication 1, dans lequel une extrémité des plaques d'extrémité du deuxième cadre s'étend jusqu'à la plaque centrale du premier cadre.

4. Module de batterie selon la revendication 1, dans lequel les plaques d'extrémité du deuxième cadre entourent au moins une partie de la plaque centrale du premier cadre.

5. Module de batterie selon la revendication 1, dans lequel la pluralité de cadres unitaires comprennent en outre un troisième cadre comprenant la plaque centrale présentant une largeur supérieure à une largeur de la plaque centrale du deuxième cadre.

6. Module de batterie selon la revendication 1, dans lequel le premier cadre comprend une rainure de montage formée dans une surface interne afin qu'une extrémité de l'au moins un élément de batterie soit logée dans la rainure de montage, dans lequel la rainure de montage fait saillie vers le canal de ventilation.

7. Module de batterie selon la revendication 1, dans lequel deux plaques d'extrémité situées au niveau de la partie de chevauchement comprennent une entrée et une sortie du canal de ventilation à des extrémités opposées.

8. Module de batterie selon la revendication 1, dans lequel le canal de ventilation est configuré de sorte qu'une direction d'écoulement d'un fluide soit perpendiculaire à une direction dans laquelle la pluralité de cadres unitaires sont couplés entre eux.

9. Module de batterie selon la revendication 1, comprenant en outre un cadre d'extrémité configuré pour fermer une extrémité ouverte, dans un état où la pluralité de cadres unitaires sont insérés et couplés les uns aux autres,
dans lequel le cadre d'extrémité comprend une partie de guidage d'extrémité configurée pour guider des positions d'insertion de la pluralité de cadres unitaires.

10. Bloc-batterie comprenant le module de batterie selon l'une quelconque des revendications 1 à 9.

11. Véhicule comprenant le module de batterie selon l'une quelconque des revendications 1 à 9.
